# EUROPÄISCHE PATENTSCHRIFT

(11) **EP 3 868 481 B1**
(45) Veröffentlichungstag und Bekanntmachung des Hinweises auf die Patenterteilung: **07.06.2023**
(21) Anmeldenummer: 20205823.6
(22) Anmeldetag: 05.11.2020
(51) Int. Cl.: B06B 1/06, G01S 7/521, H04R 17/00

(54) **ULTRASCHALLSENSOR**
ULTRASOUND METER
CAPTEUR À ULTRASONS

(30) Priorität: 18.02.2020 DE 202020100871 U
(43) Veröffentlichungstag der Anmeldung: 25.08.2021
(73) Patentinhaber: Leuze electronic GmbH + Co. KG, 73277 Owen/Teck (DE)
(72) Erfinder: SCHEU, Thomas, 72639 Neuffen (DE); MARTINI, Inge, 73092 Heiningen (DE); PATZ, Jürgen, 72660 Beuren (DE)
(74) Vertreter: Ruckh, Rainer Gerhard

(56) Entgegenhaltungen:
- EP-A1- 3 101 441
- WO-A2-2011/085872
- DE-A1-102009 046 144
- DE-C1- 19 927 797
- US-A1- 2010 071 472

## Beschreibung

Die Erfindung betrifft einen Ultraschallsensor mit einem Sensorgehäuse, in dem zumindest ein Piezoelement mit einem Winkel seiner Wandlerfläche zu einer Detektionsebene für Objekte festgelegt ist, gemäß dem Oberbegriff von Anspruch 1.

Ultraschallsensoren als Vorrichtungen zum Senden und Empfangen von Ultraschallwellen sind bekannt. Generell weisen diese Ultraschallwandler ein Piezoelement auf, das in Form einer elektrisch intermittierend ansteuerbaren Keramik gebildet ist. Die Keramik kann durch Bestromen Ultraschallwellen aussenden, sie kann auch Ultraschallwellen empfangen und in elektrische Signale umwandeln. Sie wird jeweils in Schwingungen versetzt, wenn sie bestromt wird oder wenn sie von Ultraschallwellen getroffen wird.

Mit derartigen Ultraschallsensoren können beispielsweise Etiketten auf Trägermaterialien detektiert werden. Dabei wird ein gabelförmiges Sensorgehäuse an seinem ersten Gabelarm mit einem Ultraschallsender versehen und an seinem zweiten Gabelarm mit einem Ultraschallempfänger versehen. Zwischen den Gabelarmen lassen sich Etiketten bewegen. Mit Hilfe von Ultraschall wird die Transmission durch das Etikett und das Trägermaterial gemessen. Aufgrund der gemessenen Transmission wird ein Schaltsignal generiert, dessen Schaltzustände angeben, ob eine Etikette auf dem Trägermaterial vorhanden ist oder nicht. Es entstehen dabei am zu detektierenden Medium Reflektionen, welche zum Ultraschallsender zurückreflektiert werden.

Durch Mehrreflektionen der vom Sender emittierten Ultraschallwellen können Messungenauigkeiten auftreten.

Dies kann vermieden werden, wenn der Winkel der Achsen des Senders und des Empfängers nicht parallel zu der Detektionsebene verläuft.

Bei Ultraschallsensoren gemäß dem Stand der Technik bedarf es zu der winkligen Montage des Senders und des Empfängers zahlreicher und aufwändiger Justage- und Arbeitsschritte.

Die DE 10 2009 144 A1 beschreibt beispielsweise einen Ultraschallwandler mit komplexen, aus vielen einzelnen zu montierenden Teilen. Dabei ist der Ultraschallwandler mit einer Gehäusehülse gebildet, die topfförmig ist und zu Meßzwecken an Fluidströmungen durch eine Abdichtfolie abgedichtet ist.

Das Piezoelement oder Wandlerkern des Ultraschallsensors ist mit einem Anpasskörper versehen, der die Koppelung zwischen dem Piezoelement und dem fluiden Medium verbessert. Es ist ferner ein Verbindungselement vorgesehen, um das Piezoelement und den Anpasskörper zu verbinden. Das Verbindungselement passt die thermisch/mechanischen Eigenschaften des Piezoelements an diejenigen des Anpasskörpers an.

Der Ultraschallwandler weist zudem ein diesen umschließendes Entkoppelungselement auf, das das Piezoelement im Gehäuseinnenraum des Ultraschallwandlers fixiert und eine akustische Ankoppelung des Piezoelementes an die Gehäusehülse verhindert. Weiter ist ein Dämpfungselement vorgesehen, das an der Rückseite des Piezoelementes, die dem Fluid abgewandt ist, angeordnet ist.

Ferner ist ein rückseitiger Deckel vorgesehen, der den Gehäuseinnenraum, in dem das Piezoelement angeordnet ist, abschließt. Das Sensorgehäuse selbst weist zudem Führungselemente auf, die ein winkelgenaues Einpassen der Gehäusehülse mit dem Piezoelement im Sensorgehäuse ermöglichen.

Insgesamt bauen die bekannten Ultraschallsensoren aufwändig und mit vielen Bauteilen, wodurch zum einen der Bauraumbedarf nicht minimiert ist und zum anderen die Herstellungskosten und Montagekosten noch Wünsche offenlassen.

Die DE 199 27 797 C1 betrifft einen Ultraschallwandler, insbesondere für Messungen in Gasen, sowie ein Verfahren zu seiner Herstellung. Der Ultraschallwandler weist ein Gehäuse mit einer Bodenwandung und Seitenwandungen, einen Wandlerkörper, der an einer Innenfläche der Bodenwandung angeordnet ist, und eine Halterung für das Gehäuse auf, die zumindest in einem von der Bodenwandung beabstandeten hinteren Bereich des Gehäuses über Verbindungselement mit Außenflächen der Seitenwandungen verbunden ist. Das Verbindungselement wird durch ein zwischen die Seitenwandungen und die Halterung eingegossenes Elastomer gebildet, das in ein oder mehrere Vorsprünge oder Vertiefungen eingreift, die an den Außenflächen der Seitenwandungen und an der Halterung vorgesehen sind. Das Elastomer bedeckt weiterhin den hinteren Bereich des Gehäuses vollständig. Das Eingießen des Elastomers zwischen das Gehäuse des Ultraschallwandlers und die Halterung ist mit einer beide Bestandteile fixierenden Vergussform möglich.

In der DE 10 2009 046 144 A1 wird ein Ultraschallwandler zum Einsatz in einem fluiden Medium beschrieben. Der Ultraschallwandler umfasst mindestens eine Gehäusehülse mit mindestens einem Gehäuseinnenraum. In den Gehäuseinnenraum ist mindestens ein Wandlerkern eingebracht. Der Wandlerkern umfasst mindestens ein akustisch-elektrisches Wandlerelement. Außerhalb des Gehäuseinnenraums steht mindestens ein Dämpfungselement mit der Gehäusehülse in Kontakt, welches eingerichtet ist, um einen Körperschall zu dämpfen.

Die EP 3 101 441 A1 betrifft einen Ultraschallwandler umfassend ein piezoelektrisches Wandlerelement mit einer Oberseite und einer Unterseite, ein becherförmiges Gehäuse, mit einer Oberseite und einer Unterseite, wobei an der Oberseite eine Öffnung ausgebildet ist, und ein Koppelelement mit einer Vorderseite und einer Rückseite, wobei die Rückseite des Koppelelements mit der Oberseite des Wandlerelements akustisch verkoppelt ist, um in einem Sendemodus die mittels des Wandlerelements erzeugten Ultraschallwellen an die Umgebung auszukoppeln oder um in einem Empfangsmodus die aus der Umgebung von dem Koppelelement empfangenen Ultraschallwellen an das Wandlerelements weiterzuleiten. Das Wandlerelement und das Koppelelement sind in dem Gehäuse angeordnet. Weiterhin sind eine erste Elektrode und eine zweite Elektrode vorgesehen, wobei die erste Elektrode mit einer an der Unterseite des Wandlerelements ausgebildeten Kontaktfläche verschaltet ist. Das Wandlerelement ist in einer becherartigen Abschirmvorrichtung aus einem metallisch leitfähigen Material angeordnet.

Die WO 2011/085872 A2 betrifft einen Ultraschallwandler zum Einsatz in einem fluiden Medium vorgeschlagen. Der Ultraschallwandler umfasst mindestens ein Gehäuse, insbesondere eine Hülse. Das Gehäuse weist mindestens einen Innenraum auf. In dem Innenraum ist mindestens ein Wandlerkern mit mindestens einem elektrisch-akustischen Wandlerelement aufgenommen. Das Gehäuse weist eine den Wandlerkern zumindest teilweise umschließende Gehäusewand mit mindestens einem Hohlraum aufweist.

Die US 2010/0071472 A1 betrifft eine Befestigungsstruktur, an welcher ein Ultraschallsensor gelagert ist. Die Befestigungsstruktur weist ein Befestigungselement und ein Verschlusselement auf, die aus einer Vergussmasse bestehen.

Ausgehend von diesem Stand der Technik liegt der Erfindung die Aufgabe zugrunde, einen Ultraschallwandler zu schaffen, dessen Aufbau vereinfacht ist, der kostengünstig herstellbar und besonders sicher im Betrieb ist.

Die Aufgabe wird mit einem Ultraschallsensor mit den Merkmalen von Anspruch 1 gelöst.

Die Erfindung betrifft einen Ultraschallsensor mit einem Sensorgehäuse, in dem Ultraschallwandler festgelegt ist. Der Ultraschallwandler ist mittels einer aus dem flüssigen Zustand in einen elastischen oder festen Zustand überführten Vergussmasse an dem Sensorgehäuse festgelegt. Die Vergussmasse stützt sich an einem Umfangsflächenbereich des Ultraschallwandlers und an dem Sensorgehäuse ab. Der Ultraschallwandler ist mit einem Winkel seiner Wandlerfläche zu einer Detektionsebene für Objekte im Sensorgehäuse festgelegt. Der Winkel beträgt 1° bis 20°. Der Ultraschallsensor weist eine Resonanzfrequenz von 300 bis 500 kHz auf. Die Vergussmasse bewirkt bei einer Temperatur von etwa -20°C eine Dämpfung der Ultraschallwellen von mindestens 40 dB.

Dadurch, dass der Ultraschallwandler des Ultraschallsensors mittels einer aus dem flüssigen Zustand in einen elastischen oder festen Zustand überführten Vergussmasse an dem Sensorgehäuse festgelegt ist und sich die Vergussmasse an einem Umfangsflächenbereich des Ultraschallwandlers und an dem Sensorgehäuse abstützt, ist eine technische Maßnahme angegeben, die eine signifikante Vereinfachung des Aufbaues und der Montage des Ultraschallsensors ermöglicht, wobei der Ultraschallwandler dadurch gleichzeitig sowohl winkelgenau als auch akustisch entkoppelt in dem Sensorgehäuse festgelegt ist. Die alleinige Anwendung der Vergussmasse als Festlege- und Entkoppelungseinrichtung für das jeweilige Piezoelement verringert den Bauaufwand und Justageaufwand des Ultraschallsensors erheblich.

Bevorzugte Ausführungsbeispiele ergeben sich aus den abhängigen Ansprüchen.

In einem besonders bevorzugten Ausführungsbeispiel ist der Ultraschallwandler mit Hilfe der Vergussmasse auch dichtend in dem Sensorgehäuse festgelegt, d.h. die Vergussmasse umschließt die Umfangsfläche des Ultraschallwandlers vollständig und schafft eine vollständige, flächige Verbindung zu der Umfangsfläche und dem Sensorgehäuse bzw. dessen Öffnung in welcher der Ultraschallwandler eingebracht wurde. Dadurch sind Kontaktierungen an der -Rückseite des Ultraschallwandlers vor Einflüssen im Gebrauch des Ultraschallsensors geschützt.

Zur vorläufigen Ausrichtung und Fixierung des Ultraschallwandlers in dem Sensorgehäuse, vor der Einbringung der Vergussmasse sind verschiedene Vorgehensweisen möglich. Als eine einfache, exakt reproduzierbar und rasch durchzuführende Maßnahme, die die Herstellung großer Stückzahlen an Ultraschallsensoren in kurzer Zeit ermöglicht, ist vorgesehen, eine Hilfsvorrichtung oder Winkelformhilfe in eine Öffnung des Sensorgehäuses für den Ultraschallwandler einzubringen und hernach entweder direkt den Ultraschallwandler in der Hilfsvorrichtung zu fixieren und die Vergussmasse zwischen Ultraschallwandler und Sensorgehäuse einzubringen, oder den Ultraschallwandler mit einer Zentrierhülse mit der Hilfsvorrichtung und dem Sensorgehäuse lösbar zu verbinden, um danach die Hilfsvorrichtung und die Zentrierhülse zu entfernen und die Vergussmasse an dem beschriebenen Ort einzubringen und sich verfestigen zu lassen.

Die Hilfsvorrichtung kann auch als Formvorrichtung für die zwischen Ultraschallwandler und Sensorgehäuse einzubringende Vergussmasse dienen und erst nach Verfestigen der Vergussmasse entfernt werden.

Die Hilfsvorrichtung sorgt für die Einnahme eines definierten Winkels der Wandlerfläche oder der Strahlachse des Ultraschallwandlers zu dem Sensorgehäuse und der konstruktiv vorgesehenen Detektionsebene und die Hilfsvorrichtung ist zugleich Formteil zur Definition der Außenform der verfestigten Vergussmasse.

Es kann auch vorteilhaft sein, den Ultraschallwandler hilfsweise durch eine Verklebung oder ein Klebeband unter Zuhilfenahme der Hilfsvorrichtung an dem Sensorgehäuse zu fixieren um danach die Vergussmasse einzubringen.

Es kann auch vorteilhaft sein, die Vergussmasse an den Ultraschallwandler zu bringen und in einer um den Ultraschallwandler gelegten Form sich verfestigen zu lassen um die Einheit aus Ultraschallwandler und Vergussmasse danach unter Zuhilfenahme der Hilfsvorrichtung oder Winkelformhilfe dichtend in das Sensorgehäuse zu führen und zu fixieren. Diese Vorgehensweise ist von der Erfindung mit umfasst.

Die Vergussmasse kann beschleunigt durch Anwendung von Wärme etwa eines Temperofens verfestigt werden. Die Vergussmasse verhindert in jedem Fall, dass zumindest im Ultraschallbereich eine unerwünschte akustische Signalausbreitung oder eine Eigenschwingung des Piezoelementes entsteht.

Um elektromagnetische Störeinflüsse auf den Ultraschallwandler auszuschließen, ist dieser von einer Abschirmeinrichtung umgeben. Die Abschirmeinrichtung, die üblicherweise hülsenartig oder gitterartig gebildet ist, kann vor oder nach dem Verfestigen der Vergussmasse eingebracht und um den Ultraschallwandler angeordnet werden. Sie kann etwa in einer Aussparung der verfestigten Vergussmasse eingebracht sein.

Bei der Erfindung ist besonders vorteilhaft eine Abschirmeinrichtung in der Art einer Abschirmhülse mit vorzugsweise einstückig dazu gebildeten Führungselementen zur Führung und Positionierung der Abschirmhülse an dem Sensorgehäuse vorgesehen. Die Abschirmhülse kann ferner eine Codierung aufweisen, die verschiedene Zwecke zur Informationsspeicherung und -weitergabe erfüllen kann. Sie kann auch zur Plausibilisierung des korrekten Einbaues und der korrekten Größe der Hülse dienen.

In jedem Fall wird die Wandlerfläche und/oder die Strahlachse des Ultraschallwandlers mit Hilfe der Form der Hilfsvorrichtung und einer Kontur des Sensorgehäuses, an der die Hilfsvorrichtung zu liegen kommt, gegenüber der Detektionsebene ausgerichtet. Der Winkel zwischen der Wandlerfläche und der Detektionsebene liegt in einem Bereich zwischen 1° und 20° .

Die Vergussmasse selbst kann je nach Charakteristik des Ultraschallwandlers aus verschiedenen Werkstoffen gebildet sein. So eignen sich Kunststoffe mit und ohne Füllstoffe, die die Dämpfungseigenschaften der Vergussmasse mit bestimmen besonders in der Art von Thermoplasten, Duroplasten (z.B. Epoxidharzen) oder auch Elastomere, wie z.B. selbst sich verfestigenden Silikone.

Die Verfestigung der Vergussmasse kann durch Polyaddition, Polykondensation oder Polymerisation bevorzugt erfolgen. Auch eine Trocknung zur Verfestigung der Vergussmasse kann vorteilhaft sein.

Für die Detektion von Etiketten eignet sich besonders ein Ultraschallwandler, dessen Resonanzfrequenz erfindungsgemäß im Bereich von 300 bis 500 kHz.

Erfindungsgemäß wird eine Vergussmasse eingesetzt, die bei einer Temperatur von etwa - 20° C eine Dämpfung der Ultraschallwellen von mindestens 40 dB bewirkt.

Als Füllstoffe für die Anwendung in der Vergussmasse kann z.B. Microballons verwendet werden.

Die Erfindung wird im Folgenden anhand der Zeichnung erläutert. Es zeigen:
- Fig. 1: einen schematischen, nicht maßstäblichen vertikalen Längsschnitt durch einen erfindungsgemäßen Ultraschallsensor.
- Fig. 2: eine perspektivische Ansicht des Sensorgehäuses des Ultraschallwandlers in Fig. 1 mit einer Gehäuseöffnung zum Einbringen von zwei Piezoelementen als ein Paar von Ultraschallsender und Ultraschall-empfänger,
- Fig. 3: eine perspektivische Ansicht des Sensorgehäuses des Ultraschallwandlers in Fig. 1 mit einer Hilfsvorrichtung zum Halten und Positionieren des Piezoelementes und zur Formgebung einer zwischen das Piezoelement und das Sensorgehäuse eingebrachten Vergussmasse,
- Fig. 4: eine perspektivische Ansicht des Sensorgehäuses mit Ultraschallwandler und Hilfsvorrichtung,
- Fig.5: eine perspektivische Ansicht eines Sensorgehäuses mit einer durch die Vergussmasse fixierten Abschirmhülse, die sich mit Führungselementen an dem Sensorgehäuse abstützt, und
- Fig. 6: eine perspektivischen Ansicht einer als Abschirmhülse gebildeten Abschirmeinrichtung für ein Piezoelement.

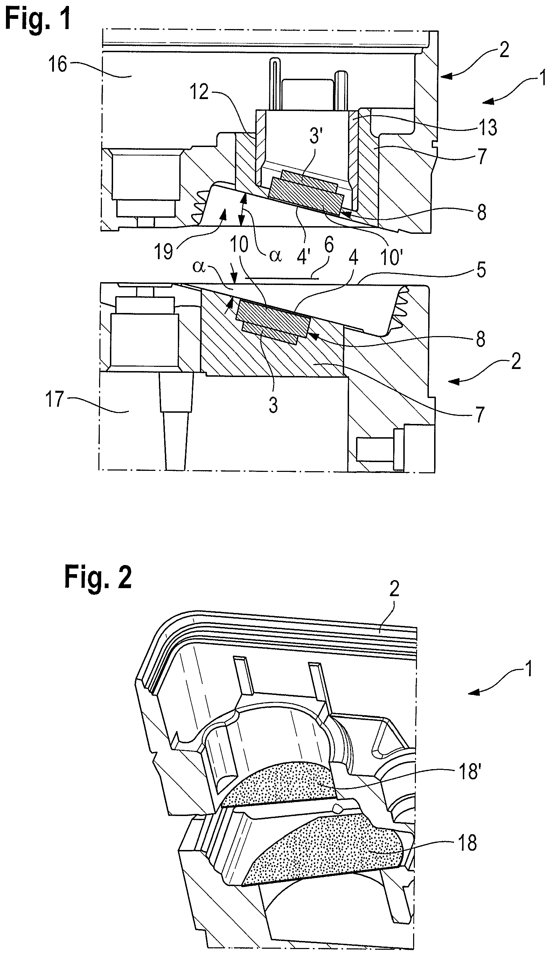

In Fig. 1 ist in einem schematischen, vertikalen nicht maßstäblichen Längsschnitt ein Ultraschallsensor 1 mit einem Sensorgehäuse 2 gezeigt. Das Sensorgehäuse 2 ist gabelförmig gebildet und weist einen oberen Gabelarm 16 und einen unteren Gabelarm 17 auf, zwischen denen sich eine Detektionsebene 5 aufspannt, in der zu detektierende Objekte 6 in Form von Etiketten auf einem Bandmaterial angeordnet sind. Der Ultraschallsensor 1 weist einen Ultraschallwandler mit einem Piezoelement 3 und einer Anpassungsschicht 10 auf, das in dem unteren Gabelarm 17 angeordnet ist und als Ultraschallwellen emittierender Sender dient. Ein weiterer Ultraschallwandler mit einem Piezoelement 3' und einer Anpassungsschicht 10' ist in dem oberen Gabelarm 16 angeordnet und dient als Ultraschallwellen empfangender Empfänger.

Das Band- oder Trägermaterial mit den Etiketten liegt in der Detektionsebene 5 und wird in einer Förderrichtung senkrecht zur Bildebene bewegt.

Eine jeweilige Wandlerfläche 4, 4` ist über jeweils einen Winkel α zu der Detektionseben 5 angeordnet. Durch diese Maßnahme werden Mehrfachreflektionen der Ultraschallwellen an dem Bandmaterial mit Etiketten vermieden.

Um die Übertragung von Schall von dem Piezoelement 3, 3' auf das Sensorgehäuse 2 zu vermeiden, ist jedes Piezoelement 3, 3' in einer schwingungsdämpfenden und verfestigten Vergussmasse 7 an einem Umfangsflächenbereich 8 des Piezoelementes 3, 3' und an dem Sensorgehäuse 2 abgestützt. In dem gezeigten Ausführungsbeispiel ist jedes Piezoelement 3, 3' auch dichtend mit der Vergussmasse 7 in dem jeweiligen Gabelarm 16, 17 festgelegt, d.h. die Vergussmasse 7 umschließt jedes Piezoelement 3, 3' an seiner jeweiligen Umfangsfläche ganz. Mit der Vergussmasse 7 kann das Schwingungsverhalten des Ultraschallsensors 1 abgestimmt werden.

Die Vergussmasse 7 kann aus einem Zweikomponenten-Silikon gebildet sein. Es kann auch vorteilhaft sein, ein Epoxyd-System mit oder ohne Füllstoffe zu verwenden.

Vor dem Einbringen und Verfestigen der Vergussmasse 7 ist in dem in den Figuren 2 bis 5 gezeigten Ausführungsbeispiel zunächst das Sensorgehäuse 2 bzw. der obere und untere Gabelarm 16, 17 mit einer Klebefolie 18, 18` abzudichten, dass die eingebrachte flüssige Vergussmasse 7 nicht wegfließen kann (vgl. Fig. 2).

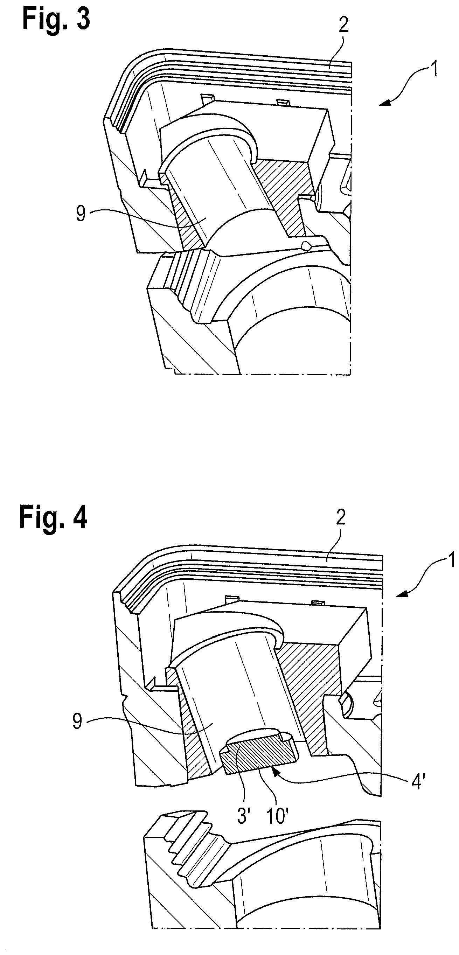

Danach wird eine Hilfsvorrichtung 9 (hier nur im oberen Gabelarm 16 gezeigt) an einer Gehäuseöffnung 19 zur Aufnahme des Piezoelementes 3 angeordnet. Die Hilfsvorrichtung 9 ist ein für die Vergussmasse 7 formgebender Flächenformkörper, der zudem als Winkelformhilfe zur Einstellung und Festlegung des Winkels α der Wandlerfläche 4 zu der Detektionsebene 5 dient. In dieser Hilfsvorrichtung 9 kann das jeweilige Piezoelement 3 eingesetzt werden (Fig. 4). Es kann auch zusätzlich eine nicht gezeigte Zentrierhülse eingesetzt werden, die die Positionierung des Piezoelementes 3 zu dem Sensorgehäuse 2 übernimmt und sich an der Hilfsvorrichtung 9 abstützen kann.

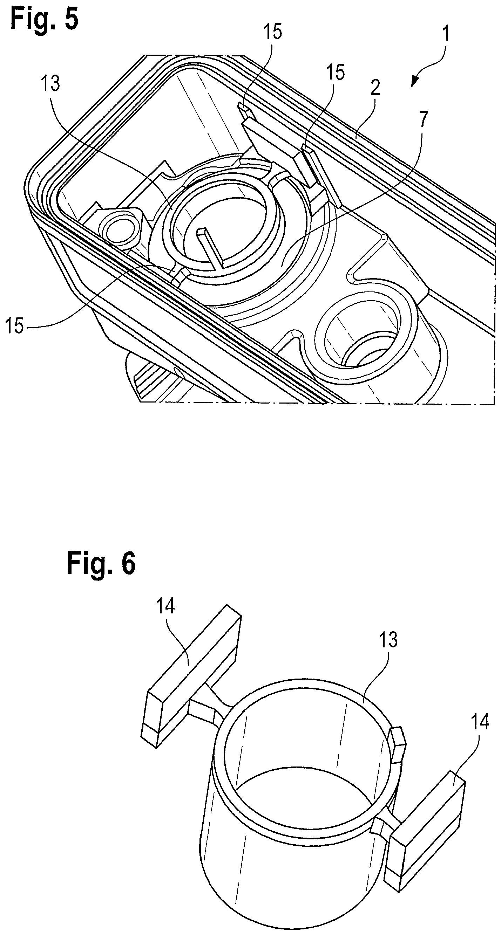

Nach der Verfestigung der Vergussmasse 7, das auch in einem Autoklaven beschleunigt durch Temperatureinwirkung erfolgen kann, wird die Hilfsvorrichtung 9 entfernt und empfängerseitig am oberen Gabelarm 16 eine Abschirmeinrichtung in eine Aussparung 12 in der Vergussmasse 7 eingesetzt. Das Einbringen und Positionieren der Abschirmeinrichtung in das Sensorgehäuse 2 in Form vorzugsweise einer Abschirmhülse 13 (vgl. Fig. 5 und Fig. 6) kann auch vor dem Einfüllen der Vergussmasse 7 erfolgen. Hier dienen beispielsweise Führungselemente 14, die einstückig mit der Abschirmhülse 13 gebildet sind und sich an korrespondierenden Konturen 15 (vgl. Fig. 5) in dem Sensorgehäuse 2 abstützen und die Abschirmhülse 13 in Position halten. Die Führungselemente 14 und Teile der Abschirmhülse 13 können danach von Vergussmasse 7 zumindest teilweise umschlossen und endgültig fixiert werden.

Wie Fig. 1 zeigt, kann die jeweilige Wandlerfläche 4, 4` des jeweiligen Piezoelementes 3, 3' vollständig von der Vergussmasse 7 umschlossen werden und somit das jeweilige Piezoelement 3, 3 ` vollständig von der Umgebung isoliert sein.

### Bezugszeichenliste

- (1): Ultraschallsensor
- (2): Sensorgehäuse
- (3, 3'): Piezoelement
- (4, 4'): Wandlerfläche
- (5): Detektionsebene
- (6): Objekt
- (7): Vergussmasse
- (8): Umfangsflächenbereich
- (9): Hilfsvorrichtung
- (10, 10'): Anpassungsschicht
- (12): Aussparung
- (13): Abschirmhülse
- (14): Führungselement
- (15): Kontur, v. 2
- (16): Gabelarm, oberer
- (17): Gabelarm, unterer
- (18, 18'): Klebefolie
- (19): Gehäuseöffnung

- (α): Winkel

## Patentansprüche

1. Ultraschallsensor mit einem Sensorgehäuse (2), in dem ein Ultraschallwandler festgelegt ist, wobei der Ultraschallwandler mittels einer aus dem flüssigen Zustand in einen elastischen oder festen Zustand überführten Vergussmasse (7) an dem Sensorgehäuse (2) festgelegt ist, und sich die Vergussmasse (7) an einem Umfangsflächenbereich (8) des Ultraschallwandlers und an dem Sensorgehäuse (2) abstützt, wobei der Ultraschallwandler mit einem Winkel (α) seiner Wandlerfläche (4, 4') zu einer Detektionsebene (5) für Objekte (6) im Sensorgehäuse (2) festgelegt ist, **dadurch gekennzeichnet, dass** der Winkel (α) 1° bis 20° beträgt, und dass der Ultraschallsensor (1) eine Resonanzfrequenz von 300 bis 500 kHz aufweist, und/oder dass die Vergussmasse (7) bei einer Temperatur von etwa - 20° C eine Dämpfung der Ultraschallwellen von mindestens 40 dB bewirkt.

2. Ultraschallsensor nach Anspruch 1, **dadurch gekennzeichnet, dass** der Ultraschallwandler mit Hilfe der Vergussmasse (7) dichtend in dem Sensorgehäuse (2) festgelegt ist.

3. Ultraschallsensor nach einem der Ansprüche 1 oder 2, **dadurch gekennzeichnet, dass** der Ultraschallwandler von einer Abschirmeinrichtung umgeben ist.

4. Ultraschallsensor nach Anspruch 3, **dadurch gekennzeichnet, dass** die Abschirmeinrichtung vor oder nach dem Verfestigen der Vergussmasse (7) um den Ultraschallwandler angeordnet ist.

5. Ultraschallsensor nach Anspruch 4, **dadurch gekennzeichnet, dass** die Abschirmeinrichtung in eine Aussparung (12) der verfestigten Vergussmasse (7) eingebracht ist.

6. Ultraschallsensor nach einem der Ansprüche 3 bis 5, **dadurch gekennzeichnet, dass** die Abschirmeinrichtung als Abschirmhülse (13) mit einstückig daran gebildeten Führungselementen (14) zur Führung und Positionierung der Abschirmhülse (13) an dem Sensorgehäuse (2) gebildet ist.

7. Ultraschallsensor nach Anspruch 6, **dadurch gekennzeichnet, dass** die Abschirmeinrichtung eine Codierung aufweist.

8. Ultraschallsensor nach einem der Anspruch 1 bis 7, **dadurch gekennzeichnet, dass** die Vergussmasse (7) aus einem Elastomer- oder Thermoplast- oder Duroplast-Werkstoff gebildet ist und durch Polykondensation, Polymerisation, Polyaddition oder Trocknung verfestigt ist.

## Claims

1. An ultrasonic meter having a meter housing (2) in which an ultrasonic transducer is fixed, the ultrasonic transducer being fixed to the meter housing (2) by means of a casting compound (7) converted from the liquid state into an elastic or solid state, and the casting compound (7) being supported on a circumferential surface region (8) of the ultrasonic transducer and on the meter housing (2), wherein the ultrasonic transducer is fixed with an angle (α) of its transducer surface (4, 4') to a detection plane (5) for objects (6) in the meter housing (2), **characterised in that** the angle (α) is 1° to 20°, and **in that** the ultrasonic meter (1) has a resonant frequency of 300 to 500 kHz, and/or **in that** the casting compound (7) causes an attenuation of the ultrasonic waves of at least 40 dB at a temperature of approximately - 20°C.

2. An ultrasonic meter according to claim 1, **characterised in that** the ultrasonic transducer is fixed in a casting manner in the meter housing (2) with the aid of the casting compound (7).

3. An ultrasonic meter according to one of claims 1 or 2, **characterised in that** the ultrasonic transducer is surrounded by a shielding device.

4. An ultrasonic meter according to claim 3, **characterised in that** the shielding device is arranged around the ultrasonic transducer before or after solidification of the casting compound (7).

5. An ultrasonic meter according to claim 4, **characterised in that** the shielding device is introduced into a recess (12) of the solidified casting compound (7).

6. An ultrasonic meter according to one of claims 3 to 5, **characterised in that** the shielding device is formed as a shielding sleeve (13) with guide elements (14) formed integrally thereon for guiding and positioning the shielding sleeve (13) on the meter housing (2).

7. An ultrasonic meter according to claim 6, **characterised in that** the shielding device has a coding.

8. An ultrasonic meter according to one of the claims 1 to 7, **characterised in that** the casting compound (7) is formed from an elastomer or thermoplastic or thermoset material and is solidified by polycondensation, polymerisation, polyaddition or drying.

## Revendications

1. Capteur à ultrasons comportant un boîtier de capteur (2) dans lequel est fixé un transducteur à ultrasons, le transducteur à ultrasons étant fixé au boîtier de capteur (2) au moyen d'un composé de coulée (7) converti de l'état liquide en un état élastique ou solide, et le composé de coulée (7) étant supporté sur une région de surface circonférentielle (8) du transducteur à ultrasons et sur le boîtier de capteur (2), dans lequel le transducteur ultrasonique est fixé avec un angle (α) de sa surface de transducteur (4, 4') à un plan de détection (5) pour les objets (6) dans le boîtier du capteur (2), **caractérisé en ce que** l'angle (α) est de 1° à 20°, et **en ce que** le capteur ultrasonique (1) a une fréquence de résonance de 300 à 500 kHz, et/ou **en ce que** le composé de coulée (7) provoque une atténuation des ondes ultrasoniques d'au moins 40 dB à une température d'environ - 20°C.

2. Capteur à ultrasons selon la revendication 1, **caractérisé par le fait que** le transducteur à ultrasons est fixé de manière étanche dans le boîtier du capteur (2) à l'aide de la masse de scellement (7).

3. Capteur à ultrasons selon l'une des revendications 1 ou 2, **caractérisé par le fait que** le transducteur à ultrasons est entouré d'un dispositif de blindage.

4. Capteur à ultrasons selon la revendication 3, **caractérisé en ce que** le dispositif de blindage est disposé autour du transducteur à ultrasons avant ou après la solidification de la masse de coulée (7).

5. Capteur à ultrasons selon la revendication 4, **caractérisé par le fait que** le dispositif de blindage est introduit dans une cavité (12) de la masse de coulée solidifiée (7).

6. Capteur à ultrasons selon l'une des revendications 3 à 5, **caractérisé en ce que** le dispositif de blindage est constitué d'un manchon de blindage (13) avec des éléments de guidage (14) formés intégralement sur celui-ci pour guider et positionner le manchon de blindage (13) sur le boîtier du capteur (2).

7. Capteur à ultrasons selon la revendication 6, **caractérisé par le fait que** le dispositif de blindage comporte un codage.

8. Capteur à ultrasons selon l'une des revendications 1 à 7, **caractérisé en ce que** la masse d'enrobage (7) est formée d'un élastomère ou d'un matériau thermoplastique ou thermodurcissable et est solidifiée par polycondensation, polymérisation, polyaddition ou séchage.
